# EUROPEAN PATENT APPLICATION

(11) **EP 4 815 155 A1**
(43) Date of publication of application: **30.09.2026**
(21) Application number: 25166793.7
(22) Date of filing: 27.03.2025
(51) Int. Cl.: H01M 50/308, H01M 50/342, H01M 50/30, F16K 17/16

(54) **VALVE ASSEMBLY**

(71) Applicant: MoldTecs-01-2022 GmbH, 38667 Bad Harzburg (DE)
(72) Inventor: Ratajczack, Christelle, 53061 Laval Cedex 9 (FR); Lelièvre, Guillaume, 53061 Laval Cedex 9 (FR)
(74) Representative: STT Sozietät Thews & Thews

(57) **Abstract**

The invention relates to a non-reversible valve assembly (5) comprising:
- a valve housing (1) with an axis (1.5), a first and second axial end (1.1, 1.2), and an airflow pathway (1.3);
- a top cover (2);
- a valve opening (1a) at the first end (1.1);
- an environmental opening (1b);
- a breathable and slit-free membrane (3) between the opening (1a) and the opening (1b);
- a piercing tip (4) for said membrane (3);
- a support grid (1.4) located below said membrane (3);
- a bearing surface (1.9) for an outer wall (6.1) of a battery enclosure (6);
- said grid (1.4) is integrated in said housing (1), both forming a one-piece module (1.10) of the same material,
- said grid (1.4) is defining said opening (1a) and
- said grid is arranged at the level of said surface (1.9) with a level-offset of maximum 3 mm.

## Description

The invention relates to a non-reversible valve assembly for mounting at a wall of an enclosure comprising:
- a valve housing with an axis, a first axial end, a second axial end, and an airflow pathway extending from the first axial end towards the second axial end,
- a top cover positioned at the second axial end,
- a valve opening towards the first axial end configured for gas communication with an interior of an enclosure, said valve opening being the inlet opening of said valve housing for gas going beyond a border of an enclosure,
- an environmental opening configured for gas communication with an outside environment,
- a breathable and slit-free membrane disposed in the valve housing laterally across the airflow pathway between the valve opening and the environmental opening,
- a piercing tip arranged between said top cover and said membrane,
- a support grid located below said membrane and said membrane,
- a bearing surface that can be attached to an outer wall of a battery enclosure.

A reversible valve assembly for mounting at a wall of a battery enclosure is already known from EP 4 325 645 A1. The membrane has slits like a kind of "ketchup valve" made out from elastomer which deform for opening and closing in the area of said slits. Therefore said membrane has a thickness of least 1.5 mm, preferably at least 2 mm. There are support ribs provided for abutment of adjacent segments of the membrane along said slits and a gap between said membrane and said support ribs. The gap may measure in particular at least 0.3 mm and at most 1.2 mm. Said rips, said gap and a convex shape facing away from the base body allow the membrane segments to be pressed against each other in case of an external overpressure.

A non-reversible valve assembly for mounting at a wall of a battery enclosure is already known from US 2024/0077143 A1. A membrane is disposed in the valve housing above a support grid located below said membrane. Additionally, there is a piercing tip arranged between said membrane and a cap cracking said membrane in case of excessive internal overpressure.

A further non-reversible valve assembly for mounting at a wall of a battery enclosure is known from DE 10 2014 111 041 B4. A membrane is disposed in the valve housing above a support grid located below said membrane. Said membrane is axially fixed by a circular clamping frame, applying a holding force on said membrane and said support grid below. In case of excessive internal overpressure said membrane releases from said clamping frame.

A further non-reversible valve assembly for mounting at a wall of a battery enclosure is known from US 2024/0286085 A1. According embodiment Fig. 8, a membrane is disposed on a support grid as part of the valve. Said valve housing having two ducts extending into an enclosure. A first duct comprising a filter material, a second duct defining a valve opening of the housing.

A further non-reversible valve assembly for mounting at a wall of a battery enclosure is known from WO 2023/198504 A1. According embodiment Fig. 14 a membrane is disposed on a support grid as part of the valve.

The invention is based on the task of forming and arranging a non-reversible valve assembly so that a wider range of applications and easier assembly are possible.

In accordance with the invention, the task is solved in that said support grid is arranged at the level of said bearing surface with a level-offset of maximum 3 mm, and said support grid defining said valve opening.

This problem is solved by the following features:
- said support grid is integrated in said valve housing, whereby said support grid and said valve housing form a one-piece module of the same plastic-material,
- said support grid is defining said valve opening for gas having left a battery enclosure though a wall opening to enter said housing and
- said support grid is arranged at the level of said bearing surface with a level-offset of maximum 3 mm.

This reduces the assembly to a minimum of different parts, which allows manufacturing a valve assembly very fast. Because any effort for assembling said support grid is avoided. It is even possible to attach the membrane when manufacturing the support grid, i.e. the housing. The membrane can simply be cast in the injection mold.

Additionally, the fact that said support grid is defining said valve opening allows to arrange said support grid at the level of said bearing surface with a level-offset of maximum 3 mm. Hence said valve housing does not dip into an enclosure. In the same time, the overall height of the valve assembly is minimized. The latter is important with regard to a piercing tip, too. Said piercing tip is to be attached above the membrane and increases the overall height. Thereby the membrane is fully in touch with said support grid without being stretched case of incoming water the membrane is fully supported without being mechanically stressed. Said valve housing and the top cover forming or limiting a labyrinth like pathway for incoming and outgoing gas, which avoids a direct pathway for water, light or other extraneous matter.

This problem is solved by the following features, too:
A battery enclosure with a wall and a wall opening as exit of said enclosure with a non-reversible valve assembly as described herein.

A Procedure for manufacturing a valve assembly as described herein, whereby:
- said one-piece module composed of said housing and said support grid is molded in one step;
- said membrane being inseparably fixed to said housing, above and on the support grid;
- said top cover is inseparably connected to the housing by a form closure like welding or clipping. In case the cover is assembled with a piercing tip.

It can be advantageous, that a flame protection grille is applied at said support grid, said flame protection grille having a minimum distance_D from said support grid, with distance_D >= 0,2 mm or 0,7 mm or 1,3 mm. This ensures that said valve housing and its membrane are protected by said flame protection grille. The height is only increased by the overall thickness of the grille and the distance between the supporting grid and flame protection grille.

It can also be advantageous, if said plastic is a thermoplastic. This is the easiest way to mold it. Thermoplastics are less stable. But the duration time of the device is not of so much importance, because it is a non-reversible valve assembly.

It can also be advantageous for said membrane to be without a perforation. Only breathable membranes are of interest, because other membranes with perforations or slits are not tight enough. Due to its thinness, it is permeable to gas. This membrane could be reinforced by a reinforcing fabric.

It may be of particular importance for the present invention, if said top cover is inseparably connected to the housing, for example by welding. Hence the environment is protected from damage in the event of a membrane rupture due to a gas eruption. Additionally, the cover is assembled with a piercing tip, piercing the stretched membrane in case of a maximal gas pressure.

It can also be advantageous if said valve housing comprises an interface element, said interface element being located between said top cover and said membrane or said support grid. Said interface element serves as a basis for a piercing element placed opposite to said membrane. The need to pierce the membrane is to control the cracking pressure, i.e. maximum pressure allowed in the battery enclosure. The cracking pressure can be defined by characteristics of said piercing tip, i.e. length and/or sharpness for example.

It may also be advantageous if said top cover is featured with a clip and only fixed at said housing via said clip, said clip can generate a releasable axial holding force between said top cover and said housing. Thus, this top cover can easily be removed.

Furthermore, it may be advantageous if said clip fastened at said top cover is releasable clipable to said interface element. Therefore, no top cover holding devices are necessary on the outside of said valve assembly.

Further advantages and details of the invention are explained in the patent claims and in the description and are illustrated in the figures. It shows:
- Figure 1: an exploded view of valve assembly;
- Figure 2: an exploded view of valve assembly of a 2^{nd} embodiment;
- Figure 3: a sectional view of a valve assembly;
- Figure 4: a principle sketch of a grid and a flame protection grille;
- Figure 5: a principle sketch of a grid;
- Figure 6: a principle sketch of a battery enclosure with a valve assembly.

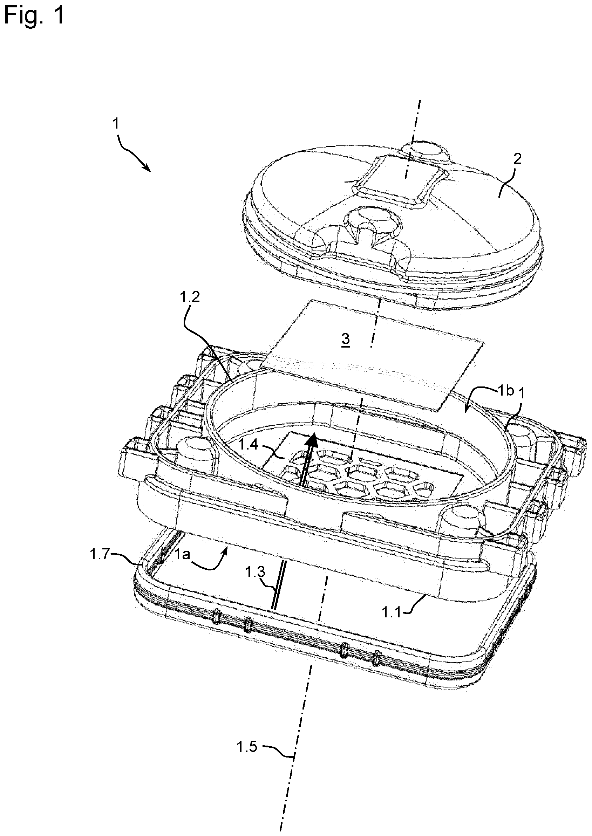

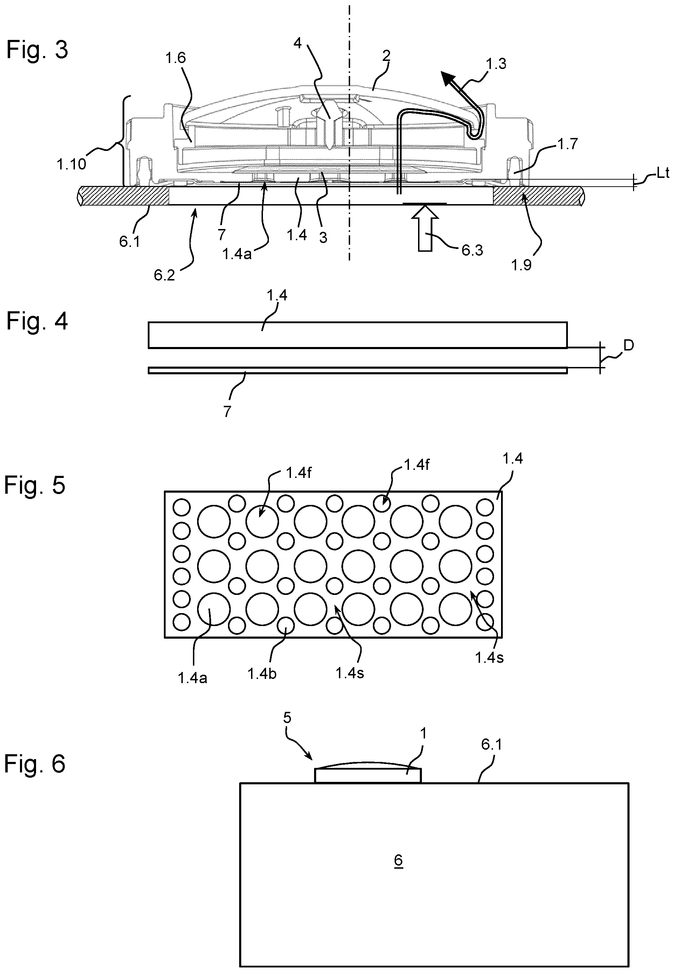

A non-reversible valve assembly 5 as exploded shown in figure 1 is for mounting at a wall 6.1 of a battery enclosure 6 as sketched in figure 6. The non-reversible valve assembly 5 comprises a valve housing 1 with a central axis 1.5, having a valve opening or housing opening 1a at the first axial end 1.1 configured for gas communication with an interior of an enclosure 6 as well as an environmental opening 1b at a second axial end 1.2 on the opposite side of the housing 1 configured for gas communication with the outside. A top cover 2 positioned at the second axial 1.2 end for covering the housing against matter from the outside. Said housing 1 forms an airflow pathway 1.3 extending from said valve opening 1a towards said environmental opening 1b.

The valve housing 1 has a bearing surface 1.9 at its first axial end 1.1 that can be attached to an outer wall 6.1 of a battery enclosure 6 for mounting reasons. Attachable to said bearing surface 1.9 is a gasket 1.7 for sealing said housing 1 against the outer wall 6.1 of the battery enclosure 6.

Additionally, there is a support grid 1.4, which is arranged in the valve housing 1 transverse to the airflow pathway 1.3, and a breathable and gap-free membrane 3, which rests on the support grid 1.4 and also extends transverse to the airflow pathway 1.3.

According figure 5 said support grid 1.4 has several round openings 1.4a, 1.4b of different size. Due to the different size of the openings 1.4a, 1.4b, the ratio between a flow-area 1.4f and a membrane-support-area 1.4s is optimizable. The round shape prevents mechanical stress on the membrane 3 in the event of external overpressure and an associated expansion force that presses the membrane against the openings 1.4a, 1.4b or their edges. Other rounded shapes or polygonal shapes with rounded corners are possible, too.

Said membrane 3 closes the airflow pathway 1.3 in a way, that all circulating gas has to permeate the membrane 3. Said membrane 3 is without any perforations. Permeability is based on the physical properties and thickness of the membrane material used. A piercing tip 4 arranged between said top cover 2 and said membrane 3 for piercing said membrane 3 in case of overpressure in the battery enclosure 6. Said piercing tip 4 (not shown) is foreseen to be connected to the top cover 2.

Said support grid 1.4 is integrated in said valve housing 1, whereby said support grid 1.4 and said valve housing 1 form an one-piece module 1.10 of the same plastic-material. Hence said valve assembly 5 consists of three parts, the housing 1, said membrane 3 and said top cover 2. Additionally, there is said gasket 1.7 located between said housing 1 and an outer wall 6.1 of a battery enclosure 6 (see figure 3). Said plastic is a thermoplastic, which makes it possible to use an injection molding process for at least said housing. It also applies to the cover mentioned, but other, more resistant material for said cover is possible.

Said support grid 1.4 is defining said valve opening 1a for gas having left a border 6.3 of a battery enclosure 6 through a wall opening 6.2 to enter the housing 1.

As illustrated in figure 3, the border 6.3 of battery enclosure is defined by an inner side of its wall 6.1, which fictively has to be applied to its opening 6.2, Said support grid is arranged at the level of said bearing surface 1.9 with a level-offset_Lt of about 1 mm or 2 mm, according figure 3. A first step of an offset would be reached if said valve opening 1a reaches said border 6.3. A further offset would go along with a penetration of said valve assembly 5 or parts of it into the battery enclosure 6.

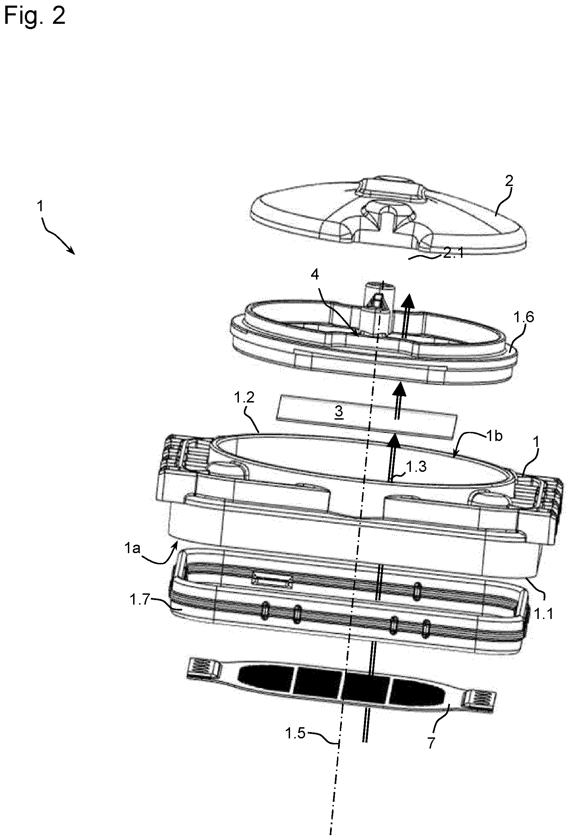

According to a second embodiment shown in figure 2, there is a flame protection grille 7 applied from below on said support grid 1.4 (not shown). Said flame protection grille 7 and said support grid 1.4 having a minimum distance_D of about 0,7 mm, shown in figure 4.

According to the embodiment shown in figure 2, said valve housing 1 comprises an additional interface element 1.6. Said interface element 1.6 is located between said top cover 2 and said membrane 3 or said support grid 1.4, whereby said inter-face element 1.6 is carrying said piercing tip 4. Hence there is no piercing force applied on said top cover 2 and said top cover 2 can be fixed to interface element 1.6 by a clip 2.1 or clip-connection.

As shown in figure 6, said valve assembly 5 is mounted on a wall opening 6.2 of a wall 6.1 of a battery enclosure 6. Said wall opening 6.2 serves as exit or entry for gas out of or into the enclosure 6.

### Reference List

- 1: valve housing
- 1a: valve opening
- 1b: environmental opening
- 1.1: first axial end
- 1.2: second axial end
- 1.3: airflow pathway
- 1.4: support grid
- 1.4a: opening
- 1.4b: opening
- 1.4f: flow-area
- 1.4s: membrane-support-area
- 1.5: central axis
- 1.6: interface element
- 1.7: gasket
- 1.9: bearing surface
- 1.10: one piece module
- 2: top cover
- 2.1: clip for 2
- 3: membrane
- 4: piercing tip
- 5: valve assembly
- 6: enclosure, battery enclosure
- 6.1: wall, outer wall
- 6.2: wall opening
- 6.3: Border of battery enclosure
- 7: flame protection grille
Nomenclature:
distance_D
level-offset_Lt

## Claims

1. A non-reversible valve assembly (5) for mounting at a wall (6.1) of a battery enclosure (6) comprising:
- a valve housing (1) with an central axis (1.5), a first axial end (1.1), a second axial end (1.2), and an airflow pathway (1.3) extending from the first axial end (1.1) towards the second axial (1.2) end;
- a top cover (2) positioned at the second axial (1.2) end;
- a valve opening (1a) at the first axial end (1.1) configured for gas communication with an interior of an enclosure (6);
- an environmental opening (1b) configured for gas communication with the outside;
- a breathable and slit-free membrane (3) disposed in the valve housing (1) laterally across the airflow pathway (1.3) between the valve opening (1a) and the environmental opening (1b);
- a piercing tip (4) arranged between said top cover (2) and said membrane (3);
- a support grid (1.4) located below said membrane (3);
- a bearing surface (1.9), that can be attached to an outer wall (6.1) of a battery enclosure (6),
**characterized in that:**
- said support grid (1.4) is integrated in said valve housing (1), whereby said support grid (1.4) and said valve housing (1) form a one-piece module (1.10) of the same plastic-material,
- said support grid (1.4) is defining said valve opening (1a) for gas having left a battery enclosure though a wall opening (6.2) to enter the housing (1) and
- said support grid is arranged at the level of said bearing surface (1.9) with a level-offset of maximum 3 mm.

2. A valve assembly (5) according to claim 1,
**characterized in that** a flame protection grille (7) is applied at said support grid (1.4), said flame protection grille (7) having a minimum distance_D from said support grid (1.4), with distance_D >= 0,2 mm or 0,7 mm or 1,3 mm.

3. A valve assembly (5) according to one of the preceding claims, **characterized in that** said plastic is a thermoplastic.

4. A valve assembly (5) according to one of the preceding claims, **characterized in that** said membrane (3) is without a perforation.

5. A valve assembly (5) according to one of the preceding claims, **characterized in that** the top cover (2) is inseparably connected to the housing.

6. A valve assembly (5) according to one of the preceding claims 1 to 4, **characterized in that** said valve housing (1) comprises an interface element (1.6), said interface element (1.6) being located between said top cover (2) and said membrane (3) or said support grid (1.4), whereby said inter-face element (1.6) serves as a basis for said piercing tip (4).

7. A battery enclosure (6) with a wall (6.1) and a wall opening (6.2) as exit of said enclosure with a non-reversible valve assembly (5) according to one of the claims 1 to 6.

8. Procedure for manufacturing a valve assembly (5) according to one of the preceding claims 1 to 6, **characterized in that**:
- said one-piece module (1.10) composed of said housing (1) and said support grid (1.4) is molded in one step;
- said membrane (3) positioned above and on the support grid (1.4) being inseparably fixed to said housing;
- said top cover (2) is inseparably fixed to the housing by a form closure like welding or clipping.
